(19) Europäisches Patentamt

European Patent Office

Office européen des brevets

(11) Publication number: **0 128 704**
A1

# (12) EUROPEAN PATENT APPLICATION

(21) Application number: 84303658.3

(22) Date of filing: 31.05.84

(51) Int. Cl.³: **E 04 C 5/07**, E 01 C 7/36, E 01 C 11/16, E 01 C 23/04, E 02 D 3/00, C 09 K 17/00, C 04 B 31/34, B 28 B 23/00

(30) Priority: 03.06.83 GB 8315289
15.06.83 GB 8316335
21.12.83 GB 8333999
23.12.83 GB 8334458

(43) Date of publication of application: 19.12.84
Bulletin 84/51

(84) Designated Contracting States: AT BE CH DE FR GB IT LI LU NL SE

(71) Applicant: Mercer, Frank Brian, Kenolbri Meins Road, Blackburn Lancashire (GB)

(72) Inventor: Mercer, Frank Brian, Kenolbri Meins Road, Blackburn Lancashire (GB)

(74) Representative: Lyndon-Stanford, Edward Willoughby Brooke et al, Marks & Clerk 57/60 Lincoln's Inn Fields, London WC2A 3LS (GB)

(54) Strengthening a matrix.

(57) In order to provide good interlock between a particulate matrix 9 and a strengthening strip 1, and give beneficial distribution of the strip 1 in the matrix 9, the matrix 9 is strengthened by substantially randomly embedding therein at least one flexible strip 1 of open mesh structure. The strip 1 is more than one hundred times as long as it is wide and has tenaceous junctions or intersections, high flexural recovery and high dimensional stability in its plane, the strip 1 being embedded without creating a substantial amount of extra void space in the matrix.

EP 0 128 704 A1

ACTORUM AG

1

M&C FOLIO: 46082X                    WANGDOC: 0131R

## Strengthening a Matrix

### Background of the Invention

Generally, the present invention relates to a method of strengthing any particulate matrix by randomly embedding therein at least one flexible strip; the matrices can be as disclosed in GB 2 120 475 B (equivalent to EP 83305982.7), but would normally be soil (which includes wastes such as mine spoil or slag and also silts and hydraulic fills). When forming a soil matrix, a binder such as cement can be incorporated.

In EP 0 017 548A and in Volume III of the "Proceedings of the Second International Conference on Geotextiles", pages 721 to 726, there is a disclosure of such a method, mainly in connection with strengthening soil. The preferred element is a highly flexible yarn, but a close-weave strip can alternatively be used. There is however a very poor interlock between the surface of the strip itself and the soil; it is believed that the primary strengthening effect is obtained by the looping round of the strip and engagement of the soil in this manner. The distribution of the strip also appears to be mainly in horizontal planes, with small radius curves in each plane (i.e. about vertical axes), giving poor anchoring of one layer into the layers above and below. Furthermore, the strip will tend to roll or to twist or condense into a rope-like shape, reducing the surface area available for engaging the soil and tending to create extra void space in the soil.

An article on pages 47 to 52 in C.R. Coll. Int. Renforcement des Sols, Paris 1979, discloses small strips for strengthening soil, but the strips do not give the optimum reinforcing effect as they have no significant transverse strength and would have a poor purchase on the soil.

The Invention

The present invention provides a method of strengthening a matrix as set forth in Claim 1, and extends to a matrix which has been strengthened by the method. Claims 2 to 10 set forth preferred features of the invention.

The strip strengthens the matrix providing a good and positive interlock generally as described in GB 2 120 475 B, the particles of the matrix penetrating into and through the open meshes of the strip. Thus the primary strengthening effect is within relatively short lengths of the strip (see the discussion on page 4, lines 1 to 19 and also Figures 1d and 1e of GB 2 120 475 B). It was found in preliminary testing that the strip is mainly in large swirls with little creasing or crumpling and often a succeeding layer is at least partly above (and spaced above) a preceding layer; the 'runs' of the strip extend in all directions and are not aligned with or parallel to each other. This provides three-dimensional strengthening of the matrix. The speed of feed of the strip in relation to the rate of flow of the particulate material can be altered to provide good control of the configuration of the strip in situ as a feeding device is moved around (and also control of the weight percentage of strip included). The looping of the strip provides a secondary reinforcing effect, but this is believed to be much less than the primary effect referred to above. There is the additional advantage that there is greater anchorage into the body of the matrix in locations where e.g. water or wind erosion may have a significant effect. For reasons discussed below, no substantial extra void space is created in the matrix. The junctions or intersections are tenaceous and enable considerable tensile forces to be taken up by the strip.

4

The strip can be mixed with the matrix in any suitable way. It is not necessary that fluid conveyance be used for the particulate material and/or for the strip. One way of mixing however is to introduce the strip into the particulate material while the particulate material is moving in loose form, e.g. gravity feed or fluid conveyed, when the masses of the material will be broken up to a large extent. The present invention is particularly applicable to strengthing a matrix formed by feeding a particulate material suspended in a fluid which can be water (the material is termed "hydraulic fill") or air. If a construction is formed by feeding suspended particulate material, there can be confinement in the construction itself in the form of a water-pervious wall or there may be no confinement at all. If the construction is confined, the cellular arrangement of GB 2 078 833 A can be used to provide water-pervious or apertured walls. Without confinement, the particulate material can assume an angle of repose greater than its normal angle of repose. As an instance of such constructions, an artificial shore line or an artificial island can be constructed by pumping sand from an adjacent location, e.g. dredged from the sea bed. Simultaneous feeding leads to a reasonable distribution of the strip, even for instance on the underwater sloping sides of artificial islands or shore lines.

In all cases, the transverse strands of the strip can cause good transportation and bedding of the strip in the sense that each layer is properly pushed down by the particulate material, which will tend to lie on top of the layer and separate that layer from the next layer. In the case of underwater constructions (e.g. forming artificial islands, reclaiming land or stabilizing river banks), the strip is carried well down below the surface by the particulate material, and there is less tendency for the particulate material to drop down below the strip as the strip descends.

The following features can be exactly as described in GB 2 120 475 B:

other strengthening, with elongate members;
tenaceous junctions or intersections;
tensile modulus;
proportion by weight of the strips (i.e. the pieces) to the matrix;

## Material of the Strips

This can be exactly as described in relation to the pieces of GB 2 120 475 B. However, as transverse interlock may be important, e.g. for applying good traction to the strip when feeding with a fluid-conveyed or gravity-fed stream of particulate material, just the transverse strands can be deep strands. The longitudinal strands can be highly orientated (e.g. up to 12:1 or more for polypropylene (PP) or high density polyethylene) and the transverse strands less highly orientated or non-orientated as found suitable. In situ, a deep strand structure (in one or two directions) creates a good interlock and abutment with the particulate material.

It is preferable that the strips have longitudinal strands – the other strands of the mesh structure would normally be roughly at right angles to the longitudinal strands, though this need not be so in all circumstances. For instance, the structures of Figure 2b of GB 2 034 240 B or of Figure 22b of EP 0 062 462 A1 could be used if the strands are much wider than they are thick and the material is sufficiently flexible to give reasonable transverse dimensional stability.

The strips have open meshes, and at least 50% of their face area is open. The open meshes reduce the tendency for slip planes to form in the matrix and give better interlock.

## Size of Strips

In all cases the strip will be thin relative to its width, i.e. much wider than it is thick; for instance, the strip may have a width at least 10 times its thickness and preferably at least 20 times its thickness, the thickness being as measured from the tops of the strands on one face to the tops of the strands on the other face.

In general terms, the strip will be more than one or two hundred times as long as it is wide. The length would normally be greater than a hundred metres and lengths of hundreds of metres, e.g. more than 500 or 1000 metres, can be used. For large constructions, the strip could be up to half a metre wide or one metre wide and e.g. two Km long; such a strip could be used for instance for constructing an island for supporting an oil rig in ten metres or twenty metres of water with a top diameter of a hundred metres. The strip could be longer than the maximum dimension of the matrix and one face of the strip could have an area greater than say the plan area of the matrix.

8

In general, it is believed desirable that each strip should be longer than the distance from the point from which the strip is fed to the zone of the matrix into which the strip will be anchored, and as a practical measure in underwater construction, longer than the distance from the feed point to the bed of the e.g. river, canal, lake or sea.

## Number of Mesh Openings in a Strip

The strip may have just one complete mesh opening across its width, particularly if the strip has relatively large meshes, e.g. meshes 15 mm wide. However, the strip preferably has a plurality of complete mesh openings across its width, especially if the mesh opening widths are smaller, e.g. at 4 or 6 mm pitch; particularly with small mesh opening widths, it is difficult to cut a mesh structure into single mesh opening widths. A preferred maximum for most applications is ten or twenty complete mesh openings across the width of the strip.

## Mesh Size and Strand Thickness

These can be as described in GB 2 120 475 B. The mesh opening sizes will depend to a certain extent upon the particle size of the particulate material. To give an instance, for fine silt, a square pitch (strand pitch) of 10 mm or down to e.g. 4 or 6 mm could be used, say with a strip width of 60 mm.

As explained under "Flexural Recovery" below, the transverse strand thickness may be greater than that of the axial (i.e. longitudinal) strands.

## Isotropic Strength

In general terms, this can be as described in GB 2 120 475 B and the strengths can be as in Claim 5 or Claim 6 of GB 2 120 475 B. However, the axial strength could be substantially greater than the transverse strength and the strengths in other directions are not so important.

## High Flexural Recovery

In general terms, this can be as described in GB 2 120 475 B. Axial flexural stiffness is desirable to avoid significant creasing or crumpling in situ. Transverse flexural stiffness is desirable to avoid rolling, twisting or condensing into a rope-like shape in situ; to assist this, the mesh structure may have substantially greater transverse flexural stiffness than

10

longitudinal flexural stiffness (even if biaxially orientated) - this can be achieved by the transverse strands being deeper than the longitudinal strands or just of greater cross-sectional area than the longitudinal strands.

## Flexibility

In theory, the strips need only have axial flexibility though in practice they would be expected to have transverse flexibility.

## High Dimensional Stability

This can be as in GB 2 120 475 B. However, in general this need only be considered in the axial and transverse directions, and the axial dimensional stability can be much greater than the transverse dimensional stability provided there is sufficient transverse dimensional stability to prevent excessive opening up, e.g. generally as defined in relation to the distortion load test given in GB 120 475 B but carried out transversely instead of on the diagonals and considering the axial length reduction.

## Density

In general terms, this can be as described in GB 2 120 475 B. However, if hydraulic fill is being used, it may be preferred to use a denser plastics material such as polyamide or polyester (both having a density greater than 1 $gm/cm^3$).

## Preferred Embodiments

The invention will be further described, by way of example, with reference to the accompanying drawings, in which:-

Figure 1 is an isometric projection of part of a strip in accordance with the invention;

Figure 2 is a schematic section, showing a method of the invention;

Figure 3 is a photograph, taken horizontally, showing the strips of the invention as they would be in a matrix;

Figure 4 is a schematic section, showing another method of the invention; and

Figure 5 shows load settlement curves.

## Figure 1

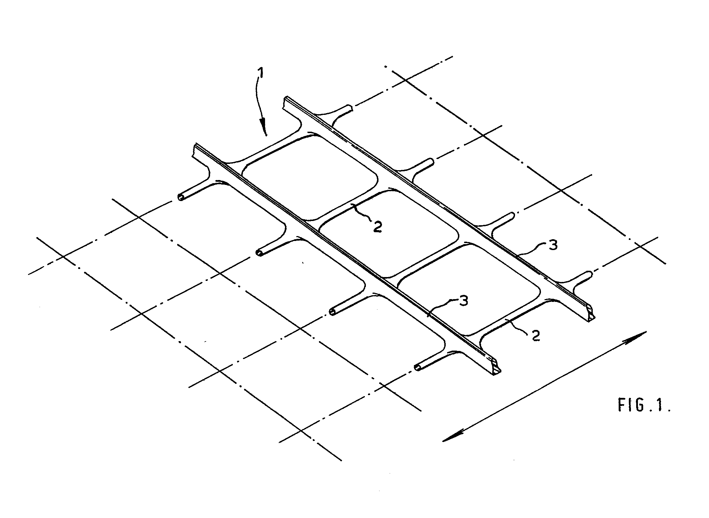

Figure 1 illustrates a part of an open mesh strip 1 (which may be termed a ribbon) having highly orientated, roughly circular cross-section longitudinal strands 2 and non-orientated or low-orientated, non-circular, deep-section transverse strands 3. The strip 1 extends in the direction of the double-headed arrow. The strip 1 is formed of plastics material as indicated in Table 1 below.

## Figures 2 and 3

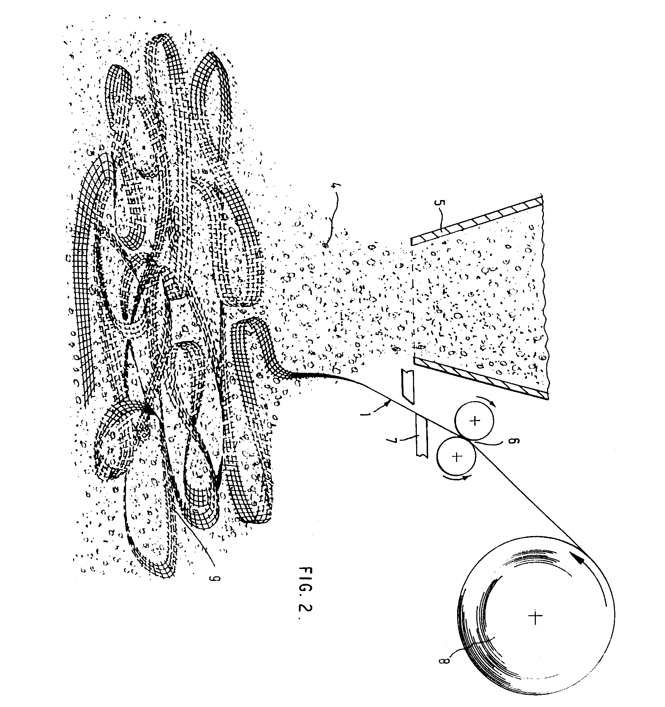

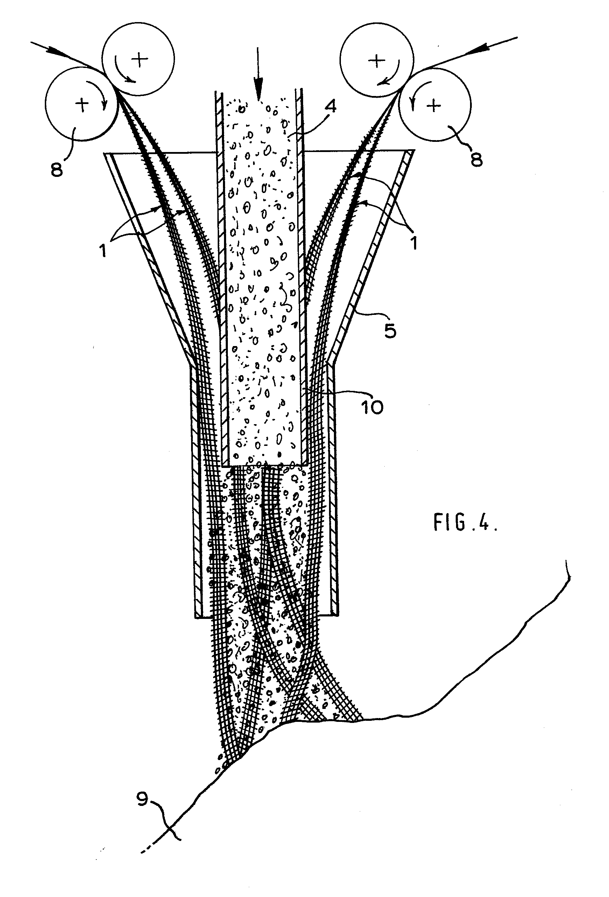

In the simple arrangement shown in Figure 2, a particulate material 4, such as broken-up earth or mine spoil, is fed by gravity from a feeding device such as a funnel 5 simultaneously with a strip 1; the feeding device can be moved around horizontally to spread the material 4 or the feeding device may be the end of a stationary conveyor for a mine dump. The strip 1 can be as in Figure 1 or can for instance be structured as in Figure 4 of GB 2 120 475 B (see Table 1 below). Though the transport of the strip 1 is assisted by the engagement of its transverse strands with the falling material 4, the strip 1 may be fed through nip rolls 6 to give a positive, controlled feed.  In general terms, although there is positioning of the strip 1 by means of the feeding device or by means of the rolls 6, the embedding of the strip 1 is uncontrolled and random. The strip 1 could possibly be cut into lengths by a chopper blade 7.  The strip 1 comes from a reel 8, and the length on the reel 8 can be very great; with a reel 8 of two metres diameter, the length on the reel 8 could be thousands of metres.  The strip 1 is much longer than the distance from the point from which the strip 1 is fed (the nip rolls 6) to the zone of the matrix 9 into which the strip 1 becomes anchored.  The strips 1 themselves can be wound in side-by-side reels, generally as disclosed in Figure 9 of GB 2 120 475 B, for instance into thirty side-by-side reels, a plurality of strips 1 being fed at the same time.

It can be seen from Figure 2 that the strip 1 becomes randomly embedded in the matrix 9 which is formed.  The strip 1 is mainly in large swirls with no or little creasing or crumpling and often a succeeding layer is at least partly above (and spaced above) a preceding layer, the "runs" of the strip 1 extending in all directions and not in general being aligned with or parallel to each other - the non-alignment is shown rather better in

14

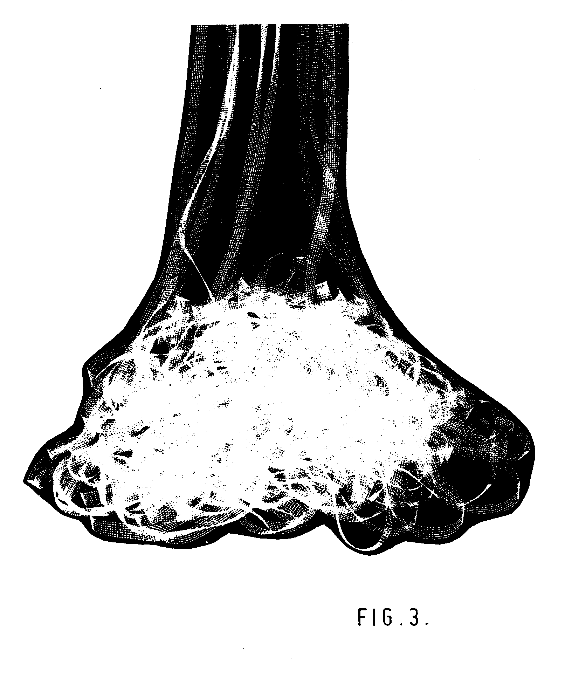

Figure 3, where ten strips 1 are shown fed simultaneously (each being five or six complete mesh openings wide). Mostly, the strips 1 lie generally uncrumpled in the matrix 9.

It would be expected that the strip 1 shown in Figure 2 would be about 0.2% w/w of the matrix 9. Measuring the area of one face of the strip 1, there could be 30 to 60 $m^2$ of strips 1 per cubic metre of matrix. If the particulate material is soil, it can be "dry", i.e. with just its normal moisture content (which can for instance be up to 10% for sand).

### Figure 4

Figure 4 shows the reconstruction of a river bank 9 using dredged sand 4 which is ejected through a spout 10. The arrangment is similar to that of Figure 2, except that strips 1 pass down through the inside of the funnel or cowl 5, which formes a Venturi; the reduced pressure assists in the transport of the strips 1, though this is also assisted by the engagement of the sand 4 with the transverse strands 3 of the strips 1.

The spout 10 may have a diameter of 70 or 100 cm, and is moved around (together with the cowl 5) as the sand 4 is ejected.  The sand 4 will slide down the slope, beneath the water, dragging the strips 1 down with it, partly due to the engagement of the sand 4 with the transverse strands 3.

Though not shown, the strips 1 in Figure 4 will lie in the matrix 9 in the same way as is shown for the strips 1 in Figures 2 and 3.

### Examples

Table 1 below gives examples of four different strips that can be used.  The test below indicates a use of the strips, on a laboratory scale.

Table 1

(average values are given)

| Mesh No. | Type of orienta-tion | Raw Matl. | Unit Weight gms/m² | Mesh Pitch mm | | Mid-point Strand Thickness mm | | | | Peak Strength KN/m | | % Extension to Peak Load | | Width mm |
|---|---|---|---|---|---|---|---|---|---|---|---|---|---|---|
| | | | | | | Axial | | Transverse | | | | | | |
| | | | | Axial | Trans | In plane | 90° to plane | In plane | 90° to plane | Axial | Trans | Axial | Trans | |
| 1 | Biaxial | PP | 52 | 6.0 | 7.1 | 0.5 | 0.5 | 0.4 | 0.4 | 3.55 | 3.8 | 24 | 18 | 42.5 |
| 2 | Biaxial | PP | 42 | 11.0 | 14.0 | 0.3 | 1.0 | 0.3 | 1.0 | 3.5 | 4.5 | 25 | 20 | 56 |
| 3 | Uniaxial | PP | 230 | 12.0 | 3.3 | 0.3 | 1.0 | 0.5 | 2.3 | 19.0 | 2.8 | 20 | 16 | 40 |
| 4 | Biaxial | PP | 40 | 11.0 | 14.0 | 0.5 | 0.5 | 0.3 | 1.0 | 3.55 | 4.5 | 24 | 20 | 56 |

All the meshes were made from a square cast mesh. Mesh No. 2 is the biaxially orientated version of Mesh No. 3, and is as shown in Figure 4 of GB 2 120 475 B. Mesh No. 4 is shown in Figure 1 of the accompanying drawings. Peak strength testing was done with clamps - apart from Mesh No. 3, it corresponds to the break load. All the strips can be manufactured and used in 1 Km lengths.

## Test

The test equipment includes a glass sided tank 2.0 m long x 0.3 m wide x 1.14 m deep with an overhead pressure foot 0.3 m long x 0.12 m wide. The foot is positioned centrally with its longer dimension extending transversely of the tank. The tank was filled with Leighton Buzzard sand using a traversing sand shower to ensure a constant sand density throughout the depth of the tank. For the test with the mesh strip inclusions, strips of mesh No. 1 of Table 1 were randomly included in the upper part of the tank to a depth twice the width of the pressure foot, i.e. 0.24 m. The reinforced part of the sand contained 0.2% by weight of strips The rate of penetration of the foot was 10.25 mm/hr.

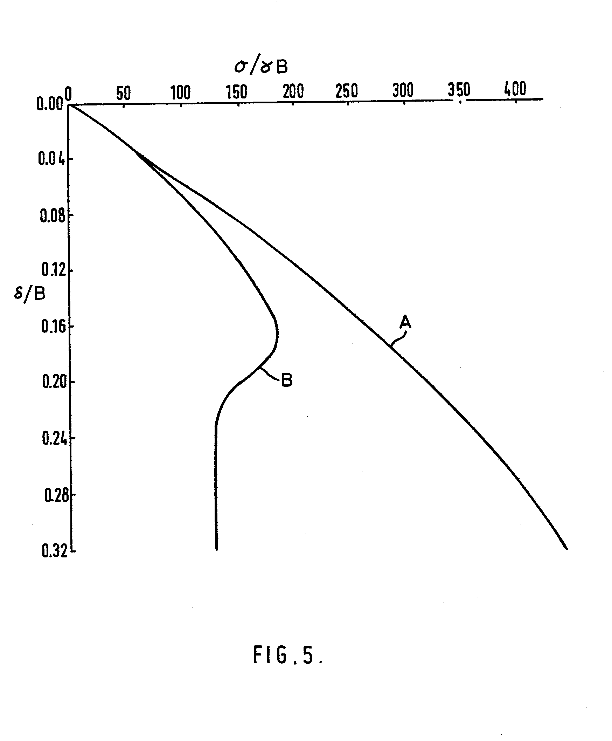

The data from the test is given in dimensionless form with the foot settlement (δ) divided by its width (B) and the applied load divided by the area of the foot to give applied stress ($\sigma$), which is in turn divided by the unit weight of the soil ($\gamma$) multiplied by the width of the foot. The test was repeated using sand alone and the results are compared in Table 2 and graphically in Figure 5 (curve A is sand plus strip and curve B is sand alone). Figure 5 clearly shows not only an improved performance at low strains, but also a continuing improvement far beyond the peak performance of the sand alone. Table 2 quantifies the improvement as a ratio.

Table 2

| $\delta/B$ | $\sigma/\gamma B$ | | Improvement Ratio |
| --- | --- | --- | --- |
| | Sand alone | Sand + Mesh | |
| 0.17 | 184 | 283 | 1.54 |
| 0.24 | 129 | 366 | 2.84 |
| 0.32 | 129 | 440 | 3.41 |

## Claims

1.  A method of strengthening a particulate matrix 9 by substantially randomly embedding therein at least one flexible strip 1 of open mesh structure, <u>characterised in that</u> the strip 1 is more than one hundred times as long as it is wide and has tenaceous junctions or intersections, high flexural recovery and high dimensional stability in its plane, the strip 1 being embedded without creating a substantial amount of extra void space in the matrix.

2.  The method of Claim 1, wherein the mesh structure is an integral plastics material mesh structure comprising molecularly-orientated strands 2, 3.

3.  The method of Claim 2, wherein the strip 1 has longitudinal strands 2 interconnected by transverse strands 3 at said junctions or intersections, the longitudinal strands being molecularly orientated and the transverse strands not being substantially molecularly orientated.

4.  The method of any one of the preceding Claims, wherein the strip 1 is introduced into the particulate material 4 of the matrix 9 while the material is moving in loose form.

5. The method of Claim 4, wherein the particulate material 4 is suspended in a fluid and the strip 1 is fed within the flow of the suspended particulate material.

6. The method of any one of the preceding Claims, wherein the strip 1 has longitudinal strands 2 interconnected by transverse strands 3 at said junctions or intersections, the transverse strands being of non-circular cross-section, the cross-section having a substantially greater dimension at right angles to the plane of the strip than the dimension in the plane of the strip.

7. The method of Claim 6, wherein the longitudinal strands 2 are of non-circular cross-section, the cross-section having a substantially greater dimension at right angles to the plane of the strip than the dimension in the plane of the strip.

8. The method of any one of the preceding Claims, wherein the strip 1 is longer than the distance from the point (8) from which the strip is fed to the zone of the matrix 9 into which the strip will be anchored.

9.   The method of any one of the preceding Claims, wherein the matrix 9 is soil (as herein defined).

10. The method of any one of the preceding Claims, and used to form an underwater structure of the reinforced matrix 9 by feeding the strip 1 and the particulate material 4 of the matrix from above the surface of the water.

11. A matrix 9 which has been strengthened by the method of any one of the preceding Claims.

FIG.1.

FIG. 2.

FIG.3.

FIG.4.

FIG.5.

# EUROPEAN SEARCH REPORT

**European Patent Office**

EP 84 30 3658

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 927 435 (MITSUI PETROCHEMICAL INDUSTRIES LTD.) * Page 6, lines 4-7; page 16, lines 16-24; page 17, lines 9-16; page 18, lines 15-22 * | 1 | E 04 C 5/07<br>E 01 C 7/36<br>E 01 C 11/16<br>E 01 C 23/04<br>E 02 D 3/00<br>C 09 K 17/00<br>C 04 B 31/34<br>B 28 B 23/00 |
| A | | 4,5,9, 11 | |
| Y | EP-A-0 021 362 (MONTEDISON S.p.A.) * Abstract * | 1 | |
| Y,D | EP-A-0 017 548 (ETAT FRANCAIS REPRESENTE PAR LE MINISTERE DE L'ENVIRONNEMENT ET DU CADRE DE VIE LABORATOIRE CENTRAL DES PONTS ET CHAUSSEES) * Page 6, line 30 - page 8, line 26; claim 10; figures 1-3 * | 1 | |
| A | | 4,5,8, 9 | TECHNICAL FIELDS SEARCHED (Int. Cl. 3)<br><br>E 04 C<br>E 01 C<br>E 02 D<br>E 04 B<br>B 28 B |
| A,D | EP-A-0 062 462 (P.L.G. RESEARCH LTD.) * Page 5, line 20 - page 7, last line; page 29, line 14 - page 30, last line; claims 1,2 * | 1-3,9, 11 | |

--- -/-

The present search report has been drawn up for all claims

| Place of search | Date of completion of the search | Examiner |
|---|---|---|
| THE HAGUE | 05-09-1984 | SARRE K.J.K.TH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

**EUROPEAN SEARCH REPORT**

0128704

EP 84 30 3658

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 073 090 (P.L.G. RESEARCH LTD.) <br> * Page 1, line 55 - page 2, line 33 * | 2,3,6, 7 | |
| | --- | | |
| A | GB-A-1 210 354 (NETLON [P.T.A.] LTD.) <br> * Page 2, lines 60-84; figures 1-3 * | 6,7 | |
| | ----- | | |

TECHNICAL FIELDS
SEARCHED (Int. Cl. 3)

The present search report has been drawn up for all claims

| Place of search | Date of completion of the search | Examiner |
|---|---|---|
| THE HAGUE | 05-09-1984 | SARRE K.J.K.TH. |